# EUROPEAN PATENT SPECIFICATION

(11) **EP 4 504 637 B1**
(45) Date of publication and mention of the grant of the patent: **25.03.2026**
(21) Application number: 22716445.6
(22) Date of filing: 07.04.2022
(51) Int. Cl.: B66B 13/26, B66B 5/00

(54) **AN INDUCTIVE SENSOR DEVICE, A METHOD, AND A SYSTEM FOR MONITORING A GAP CLEARANCE OF AN ELEVATOR DOOR**
INDUKTIVE SENSORVORRICHTUNG, VERFAHREN UND SYSTEM ZUR ÜBERWACHUNG EINES SPALTSPIELS EINER AUFZUGSTÜR
DISPOSITIF DE CAPTEUR INDUCTIF, PROCÉDÉ ET SYSTÈME DE SURVEILLANCE D'UN JEU D'ESPACE D'UNE PORTE D'ASCENSEUR

(43) Date of publication of application: 12.02.2025
(73) Proprietor: KONE Corporation, 00330 Helsinki (FI)
(72) Inventor: TALONEN, Tapani, 00330 Helsinki (FI); WENLIN, Henri, 00330 Helsinki (FI)
(74) Representative: Berggren Oy
(86) International application number: PCT/FI2022/050224
(87) International publication number: WO 2023/194646

(56) References cited:
- EP-A1- 3 127 853
- US-A1- 2004 108 171
- US-A1- 2018 238 096

## Description

### TECHNICAL FIELD

The invention concerns in general the technical field of elevators. Especially the invention concerns elevator doors.

### BACKGROUND

Typically, when elevator door(s), such as landing door(s) or elevator car door(s), are closed, a gap, i.e. a gap clearance, exists between elevator door panels in case of center opening elevator doors or between an elevator door panel and an upright door frame structure in case of a side opening elevator door. Too big, i.e. extensive, gap clearance may cause safety and/or vandalism risk. With too extensive gap clearance, it may be possible that e.g. a passenger may get fingers between the elevator door panels, and force the elevator door panels open from the bottom of the elevator door, e.g. with a tool, causing a risk of falling to the elevator shaft.

Too extensive gap clearance may be caused due to an installation adjustment, tolerances in a top railing of the elevator door and/or a friction between a sill profile of the elevator door and sliding profiles. The friction may be caused due to wearing, contamination, external impacts on the elevator door panels (e.g. by foots and trolleys) or even vandalism.

Typically, safety regulations define a limit, e.g. a safety limit, for the gap clearance, which limit shall not be exceeded. According to an example, the limit for the gap clearance may be e.g. 6 millimeters.

There may exists cases, where door safety contacts are closed in the railings on top of the elevator door panels, although the gap clearance at the bottom of the elevator door panel(s) exceeds the limit. Thus, the door safety contacts cannot be used to detect or identify that the gap clearance exceeds the limit.

A torque and/or vibration measurement and monitoring of the elevator door panel(s) may be used to detect e.g. an increased friction either in the railings or sliding profiles, but the torque and vibration measurements of the elevator door panel(s) cannot be used to detect or identify that the gap clearance exceeds the limit.

The gap clearance may be controlled with an additional contact arranged in the bottom of the elevator door, but it is not feasible for continuous monitoring for preventive maintenance, and it may generate a lot of call-outs and un-planned service visits, and even entrapment situations, if the additional contact is connected to a safety circuit of the elevator system.

Optical or magnetic sensors may be used to monitor the gap clearance, but said sensors are not enough cost effective to be used e.g. in all landing doors of the elevator system.

Thus, there is a need to develop further solutions for monitoring elevator door gap clearance.

A patent application EP 3 127 853 A1 discloses a sill gap monitoring system that includes a sensor assembly configured to sense a sill gap between an elevator sill and at least one of a bottom surface of an elevator door and a bottom surface of a gib.

### SUMMARY

The following presents a simplified summary in order to provide basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

An objective of the invention is to present an inductive sensor device, a method, and a monitoring system for monitoring a gap clearance of an elevator door. Another objective of the invention is that the inductive sensor device, the method, and the monitoring system for monitoring a gap clearance of an elevator door improve monitoring of the elevator door.

The objectives of the invention are reached by an inductive sensor device, a method, a monitoring system as defined by the respective independent claims.

According to a first aspect of the invention, an inductive sensor device for monitoring gap clearance of an elevator door is provided, wherein the inductive sensor device is arranged in association with the elevator door, wherein the inductive sensor device is configured to obtain sensor data representing the gap clearance of the elevator door being in a closed state, wherein the gap clearance is a center gap clearance between elevator door panels of a center opening elevator door or a side gap clearance between an elevator door panel and an upright door frame structure of a side opening elevator door, and wherein the inductive sensor device is further configured to: monitor the gap clearance of the elevator door based on the obtained sensor data, and/or provide the obtained sensor data to a remote monitoring entity for monitoring the gap clearance of the elevator door.

The inductive sensor device may further be configured to: detect that the gap clearance of the elevator door meets a predefined limit based on the obtained sensor data, and generate to the remote monitoring entity an indication of meeting the predefined limit in response to the detection of meeting the predefined limit.

The inductive sensor device may further be configured to: detect a long-term trend in the gap clearance of the elevator door based on the obtained sensor data, and generate to the remote monitoring entity an indication of detection of the long-term trend in response to the detection of the long-term trend.

The inductive sensor device may be arranged into a sill profile of the elevator door.

For example, the inductive sensor device may be arranged to a side of a groove of the sill profile of the elevator door or to a bottom of a groove of the sill profile of the elevator door.

The inductive sensor device may comprise an inductive coil configured to generate an alternating magnetic field that induces eddy currents in a conductive surface of the elevator door to obtain the sensor data.

The obtained sensor data may comprise a signal value representing a surface area on the conductive surface of the elevator door affected by the magnetic field generated by the inductive coil, the gap clearance of the elevator door, proximity data representing proximity between the inductive sensor device and the conductive surface of the elevator door, distance data representing distance between the inductive sensor device and the conductive surface of the elevator door, and/or position data representing a position of the conductive surface of the elevator door in relation to the inductive sensor device.

The conductive surface of the elevator door may comprise at least one elevator door panel or at least one sliding profile arranged to the at least one elevator door panel.

According to a second aspect of the invention, a method for monitoring gap clearance of an elevator door is provided, wherein the method comprises: obtaining, by an inductive sensor device arranged in association with the elevator door, sensor data representing the gap clearance of the elevator door being in a closed state, wherein the gap clearance is a center gap clearance between elevator door panels of a center opening elevator door or a side gap clearance between an elevator door panel and an upright door frame structure of a side opening elevator door; and monitoring, by the inductive sensor device and/or a remote monitoring entity, the gap clearance of the elevator door based on the obtained sensor data.

The method may further comprise: detecting, by the inductive sensor device, that the gap clearance of the elevator door meets a predefined limit based on the obtained sensor data; an generating, by the inductive sensor device, to the remote monitoring entity an indication of meeting the predefined limit in response to the detection of meeting the predefined limit.

The method further comprises: detecting, by the inductive sensor device, a long-term trend in the gap clearance of the elevator door based on the obtained sensor data; and generating, by the inductive sensor device, to the remote monitoring entity an indication of detection of the long-term trend in response to the detection of the long-term trend.

The method may further comprise detecting, by the remote monitoring entity, that the gap clearance of the elevator door meets a predefined limit based on the obtained sensor data; and/or detecting, by the remote monitoring entity, a long-term trend in the gap clearance of the elevator door based on the obtained sensor data.

The inductive sensor device may be arranged into a sill profile of the elevator door.

For example, the inductive sensor device may be arranged to a side of a groove of the sill profile of the elevator door or to a bottom of a groove of the sill profile of the elevator door.

The sensor data may be obtained by generating, by an inductive coil of the inductive sensor device, an alternating magnetic field that induces eddy currents in a conductive surface of the elevator door.

The obtained sensor data may comprise a signal value representing a surface area of the conductive surface of the elevator door affected by the generated magnetic field generated by the inductive coil, the gap clearance of the elevator door, proximity data representing proximity between the inductive sensor device and the conductive surface of the elevator door, distance data representing distance between the inductive sensor device and the conductive surface of the elevator door, and/or position data representing a position of the conductive surface of the elevator door in relation to the inductive sensor device.

The conductive surface of the elevator door may comprise at least one elevator door panel or at least one sliding profile arranged to the at least one elevator door panel.

According to a third aspect, a monitoring system for monitoring a gap clearance of one or more elevator doors is provided, wherein the monitoring system comprises: a remote monitoring entity, and one or more inductive sensor devices described above.

The remote monitoring entity may be configured to: detect based on the obtained sensor data that the gap clearance of the elevator door meets a predefined limit, and/or detect long-term trend in the gap clearance of the elevator door based on the obtained sensor data.

Various exemplifying and non-limiting embodiments of the invention both as to constructions and to methods of operation, together with additional objects and advantages thereof, will be best understood from the following description of specific exemplifying and non-limiting embodiments when read in connection with the accompanying drawings.

The verbs "to comprise" and "to include" are used in this document as open limitations that neither exclude nor require the existence of unrecited features.

The features recited in dependent claims are mutually freely combinable unless otherwise explicitly stated. Furthermore, it is to be understood that the use of "a" or "an", i.e. a singular form, throughout this document does not exclude a plurality.

### BRIEF DESCRIPTION OF FIGURES

The embodiments of the invention are illustrated by way of example, and not by way of limitation, in the figures of the accompanying drawings.
Figure 1 illustrates schematically an example of an inductive sensor device.
Figure 2 illustrates schematically a monitoring system for monitoring a gap clearance of an elevator door.
Figure 3A illustrates schematically an example of an inductive sensor device arranged into a sill profile of an elevator door being a center opening elevator door.
Figure 3B illustrates schematically an example of an inductive sensor device arranged into a sill profile of an elevator door being a side opening elevator door.
Figure 3C illustrates schematically an example of an inductive sensor device arranged to a side of a sill profile of an elevator door.
Figure 3D illustrates schematically an example of an inductive sensor device arranged to a bottom of a sill profile of an elevator door.
Figure 4 illustrates schematically an example of a method for monitoring a gap clearance of an elevator door.
Figures 5A and 5B illustrate schematically other examples of a method for monitoring a gap clearance of an elevator door.
Figure 6 illustrates schematically an example situation, wherein a gap clearance of an elevator door is detected to meet a predefined limit.
Figures 7A and 7B illustrate schematically yet other examples of a method for monitoring a gap clearance of an elevator door.
Figure 8 illustrates schematically an example of components of a remote monitoring entity.

### DESCRIPTION OF THE EXEMPLIFYING EMBODIMENTS

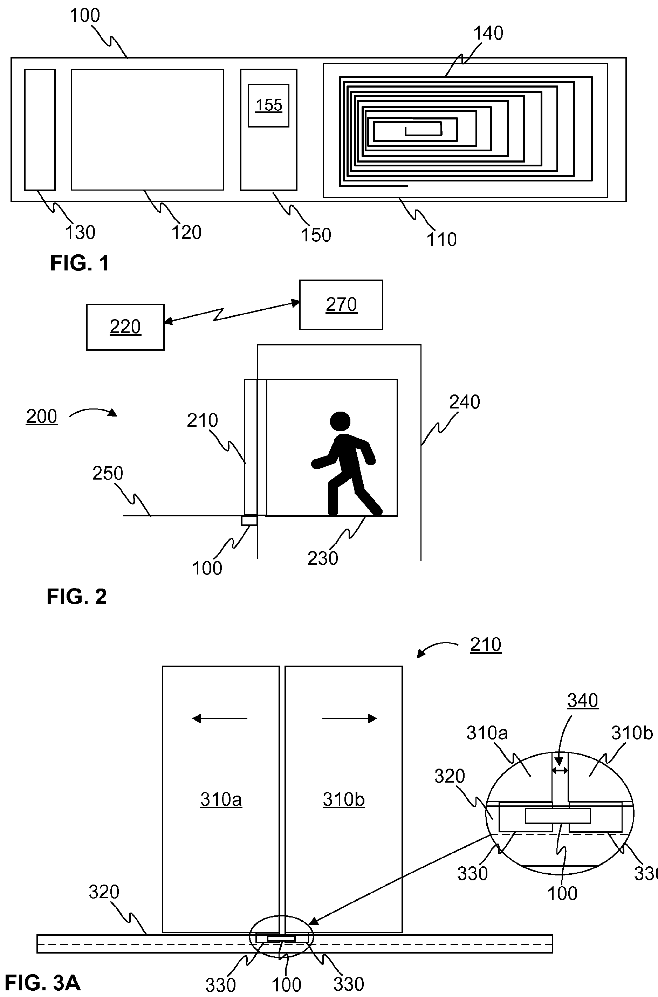

Figure 1 illustrates schematically an example of an inductive sensor device 100 for monitoring a gap clearance of an elevator door 210. The gap clearance of the elevator door 210 may be monitored for the elevator door 210 being in a closed state. The inductive sensor device 100 may for example be an inductive displacement sensor device. More preferably, the inductive sensor device 100 may be an eddy current-based inductive displacement sensor device. The inductive sensor device 100 may comprise a sensor part 110, a processing part 120, and a communication part 130. The inductive sensor device 100 may further comprise a memory part 150. The sensor part 110 of the inductive sensor device 100 may comprise an inductive coil 140 configured to induce eddy currents in a conductive surface of the elevator door 210 to obtain sensor data representing the gap clearance of the elevator door 210 as will be described later. The layout of the inductive coil 140 illustrated in the example of Figure 1 is only one example layout for the inductive coil 140. However, any other layout for the inductive coil 140 may also be applied, e.g. circular layout. The processing part 120 may comprise one or more processors, the memory part 150 may comprise one or more memories, and the communication part 130 may comprise one or more communication devices. The mentioned elements may be communicatively coupled to each other with e.g. an internal bus. The memory part 150 may store and maintain portions of a computer program (code) 155, sensor data, and any other data. The computer program 155 may comprise instructions which, when the computer program 155 is executed by the processing part 120 may cause the processing part 120, and thus the inductive sensor device 100 to carry out desired tasks, e.g. one or more of the method steps that will be described and/or operations of the inductive sensor device 100 that will be described. The processing part 120 may thus be arranged to access the memory part 150 and retrieve and store any information therefrom and thereto. For sake of clarity, the processor herein refers to any unit suitable for processing information and control the operation of the inductive sensor device 100, among other tasks. The operations may also be implemented with a microcontroller solution with embedded software. Similarly, the memory part 150 is not limited to a certain type of memory only, but any memory type suitable for storing the described pieces of information may be applied in the context of the present invention. The communication part 130 provides one or more communication interfaces for communication with any other unit, e.g. an elevator control system 270, a remote monitoring entity 220, and/or one or more databases. The computer program 155 may be a computer program product that may be comprised in a tangible nonvolatile (non-transitory) computer-readable medium bearing the computer program code 155 embodied therein for use with a computer, i.e. the inductive sensor device 100.

Figure 2 illustrates schematically a monitoring system 200 for monitoring a gap clearance of one or more elevator doors 210 of an elevator system. The monitoring system 200 of Figure 2 is implemented in an elevator environment, e.g. the elevator system. The monitoring system 200 comprises one or more inductive sensor devices 100 and a remote monitoring entity 220. The remote monitoring entity 220 may for example be a remote service center, a maintenance center, a data center, a cloud server, or a remote monitoring server. The elevator system may comprise at least one elevator car 230 arranged to travel along a respective elevator shaft 240 between a plurality of landings, i.e. floors, 250. For sake of clarity, in the example of Figure 2 only one landing 250 of the elevator system, i.e. a top landing. The elevator door 210 which gap clearance is monitored may preferably be a landing door. To be able to monitor the gap clearance of the landing door at each landing 250 of the elevator system, the monitoring system 200 may comprise one inductive sensor device 100 (belonging to the one or more inductive sensor devices) arranged in association with each landing door 210 of the elevator system for monitoring the gap clearance of said landing door 210. In other words, at each landing 250 one inductive sensor device 100 may be arranged in association with the landing door at said landing 250 for monitoring the gap clearance of the landing door at said landing 250 of the elevator system. The elevator system may further comprise an elevator control system 270 configured to control the operation of the elevator system at least in part. The one or more inductive sensor devices 100 may be communicatively coupled to the elevator control system 270 of the elevator system comprising the elevator door 210. The communication between the one or more inductive sensor devices 100 and the elevator control system 270 may be based on one or more known communication technologies, either wired or wireless. The elevator control system 270 may further be communicatively coupled with the remote monitoring entity 220. The communicative coupling between the elevator control system 270 and the remote monitoring entity 220 may be based on one or more known communication technologies, preferably one or more known wireless communication technologies. The communication between the one or more inductive sensor devices 100 and the remote monitoring entity 220 may be implemented via the elevator control system 270. The communication part 130 of each inductive sensor device 100 provides one or more communication interfaces for communication with any other unit, e.g. the elevator control system 270, and/or with any other unit.

From now on the invention is described by referring to one inductive sensor device 100, but the description applies to each inductive sensor device 100 belonging to the one or more sensor devises 100 of the monitoring system 200.

The elevator door 210 may be a center opening elevator door or a side opening elevator door. If the elevator door 210 is the center opening elevator door, the gap clearance to be monitored may be a center gap clearance, i.e. a clearance of a gap (i.e. a center gap) between elevator door panels 310a, 310b of the center opening elevator door 210 being in the closed state. Alternatively, if the elevator door 210 is the side opening elevator door, the gap clearance to be monitored may be a side gap clearance, i.e. a clearance of a gap (i.e. a side gap), between an elevator door panel 310a and an upright door frame structure 370 of the side opening elevator door being in the closed state. With the term "gap clearance of an elevator door" in context of a center opening elevator door is meant throughout this application the size (i.e. width) of the gap between two elevator door panels 310a, 310b, i.e. the distance between the two elevator door panels 310a-310b, when the elevator door is in the closed state. With the term "gap clearance of an elevator door" in context of a side opening elevator door is meant throughout this application the size (i.e. width) of the gap between an elevator door panel 310a and an upright door frame structure 370 of the side opening elevator door, i.e. the distance between an elevator door panel 310a and an upright door frame structure 370, when the elevator door is in the closed state. The elevator door, either center opening elevator door or side opening elevator door, 210 may be a sliding door moving along a sill profile 320 of the elevator door 210.

The inductive sensor device 100 is arranged in association with the elevator door 210. For example, the inductive sensor device 100 may be arranged into the sill profile 320 of the elevator door 210. The inductive sensor device 100 may preferably be arranged into the sill profile 320 substantially at a location corresponding to the gap being monitored. For example, the inductive sensor device 100 may preferably be arranged into the sill profile 320 so that the inductive coil 140 of the inductive sensor device 100, is substantially at the location corresponding to the gap being monitored. For example, in case of the center opening elevator door the inductive sensor device 100, e.g. the inductive coil 140 of the inductive sensor device 100, may be arranged into the sill profile 320 substantially at the location corresponding to the center gap between the elevator door panels 310a, 310b of the center opening door 210. According to another example, in case of the side opening elevator door, the inductive sensor device 100, e.g. the inductive coil 140 of the inductive sensor device 100, may be arranged into the sill profile 320 substantially at the location corresponding to the side gap between the elevator door panel 310a and the upright door frame structure 370 of the side opening elevator door 210. The sill profile 320 of the elevator door 210 is a preferable location for the inductive sensor device 100, because the bottom edge of the elevator door 210, i.e. the edge of the elevator door facing towards the sill profile 320, is more prone to the risk of too extensive gap clearance of the elevator door 210 than the top edge of the elevator door 210, i.e. the edge of the elevator door facing railings on the top of the elevator door 210. The sill profile 320 of the elevator door 210 may comprise a groove 325, e.g. a substantially rectangular shaped groove. The elevator door 210 may comprise at least one sliding profile, e.g. sill slider or sliding pad, 330 arranged to the bottom edge of each elevator door panel 310a, 310b of the elevator door 210. The at least one sliding profile 330 is adapted to slide (i.e. travel) along the sill profile 320 of the elevator door 210, when the elevator door 210 is moving. In other words, when the elevator door 210 is moving, the at least one sliding profile 330 arranged to each elevator door panel, 310b is adapted to slide inside the groove 325 of the sill profile 320. The at least one sill sliding profile 330 enables keeping the bottom edge of the elevator door panel(s) 310a, 310b, and thus the elevator door 210 in the groove 325 of the sill profile 320 of the elevator door 210.

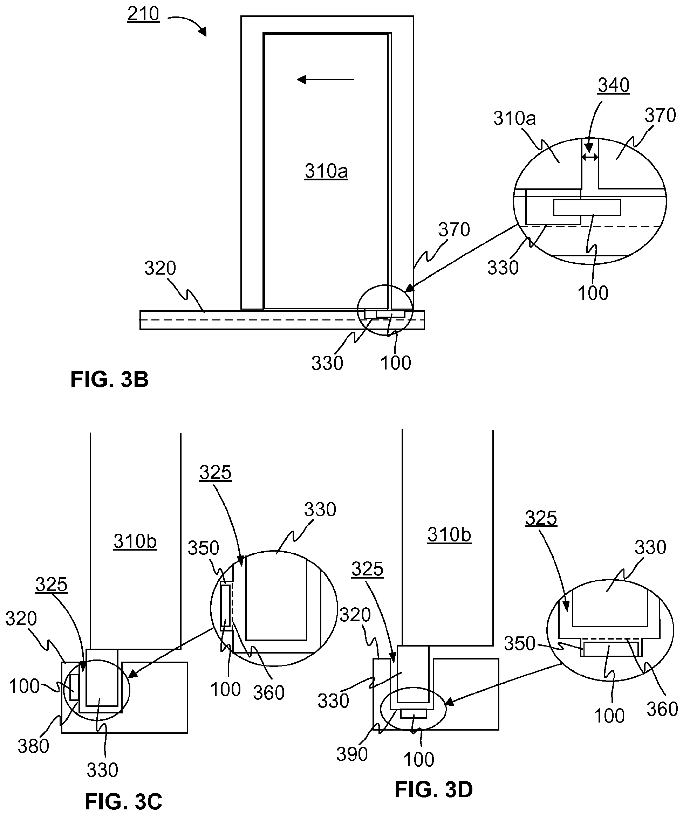

The inductive sensor device 100 may be arranged to a side 380 of the groove 325 of the sill profile 320 of the elevator door 210 or to a bottom 390 of the groove 325 the sill profile 320 of the elevator door 210 as will be described later referring to Figures 3C and 3D. The inductive sensor device 100 may be arranged on a surface of the groove 325 of the sill profile 320, either to the side 380 or bottom 390 of the groove 325 of the sill profile 320. Alternatively, a cavity 350 may be arranged to the groove 325 of the sill profile 320 for accommodate the inductive sensor device 100. The cavity 350 may be arranged to the side 380 of the groove 325 of the sill profile 320 or to the bottom 390 of the groove 325 of the sill profile 320 depending on whether the inductive sensor device 100 is arranged to the side 380 of the groove 325 of the sill profile 320 or to the bottom 390 of the groove 325 of the sill profile 320. In other words, the inductive sensor device 100 may be arranged inside the cavity 350 arranged to the side 380 of the groove 325 of the sill profile 320 or to the bottom 390 of the groove 325 of the sill profile 320. Preferably, the cavity 350 may be covered with a cover 360 having a non-conductive material, e.g. with epoxy or any other non-conductive material. This enables to keep the inductive sensor device 100 undamaged and clean, but still the inductive coil 140 of the sensor part 110 is capable to sense the induced eddy currents.

Figure 3A illustrates schematically an example, wherein the inductive sensor device 100 is arranged into the sill profile 320 of the elevator door 210 being the center opening elevator door. Figure 3A is a front view of the center opening elevator door viewed from outside the elevator car 230. The center opening elevator door 210 comprises two elevator door panels 310a, 310b and the gap clearance 340 of the elevator door 210 to be monitored by the inductive sensor device 100 is the center gap clearance between the elevator door panels 310a, 310b. The closer view of Figure 3A also illustrates the gap between the elevator door panels 310a, 310b of the center opening elevator door 210, wherein the gap clearance 340 of the elevator door 210 is indicated with the arrow 340. In the example of Figure 3A each elevator door panel 310a, 310b comprises one sliding profile 330 arranged to the bottom edge of the elevator door panel 310a, 310b on the side of the gap between the elevator door panels 310a, 310b. Each elevator door panel 310a, 310b may further comprise at least one further sliding profile 330 arranged to another location to the bottom edge of the elevator door panel 310a, 310b (for sake of clarity the at least one further sliding profile is not shown in Figure 3A). In the example of Figure 3A the inductive sensor device 100 is arranged into the sill profile 320 of the elevator door 210.

Figure 3B illustrates schematically an example, wherein the inductive sensor device 100 is arranged into the sill profile 320 of the elevator door 210 being the side opening elevator door. Figure 3B is a front view of the side opening elevator door 210 viewed from outside the elevator car 230. The side opening elevator door 210 comprises one elevator door panel 310a and the gap clearance 340 of the elevator door 210 to be monitored by the inductive sensor device 100 the side gap clearance between an elevator door panel 310a and the upright door frame structure 370 of the side opening elevator door 210. The closer view of Figure 3B also illustrates the gap between the elevator door panel 310a and the upright door frame structure 370 of the side opening elevator door 210, wherein the gap clearance 340 of the elevator door 210 is indicated with the arrow 340. In the example of Figure 3B the elevator door panel 310a comprises one sliding profile 330 arranged to the bottom edge of the elevator door panel 310a on the side of the gap between the elevator door panel 310a and the upright door frame structure 370 of the side opening elevator door 210. The elevator door panel 310a may further comprise at least one further sliding profile 330 arranged to another location to the bottom edge of the elevator door panel 310a (for sake of clarity the at least one further sliding profile is not shown in Figure 3B). In the example of Figure 3B the inductive sensor device 100 is arranged into the sill profile 320 of the elevator door 210.

Figure 3C illustrates schematically a side view of the elevator door 210. The elevator door 210 in Figure 3C may be for example the center opening elevator door of the example of Figure 3A or the side opening elevator door of the example of Figure 3B. In the example of Figure 3C the inductive sensor device 100 is arranged to a side 380 of the groove 325 of the sill profile 320 of the elevator door 210. In the example of Figure 3B the groove 325 of the sill profile is substantially rectangular shaped and the inductive sensor device 100 is arranged to the left-hand side, e.g. a first side, 380 of the rectangular shaped groove 325 of the sill profile 320, but the inductive sensor device 100 may also be arranged to the other side of the rectangular shaped groove 325 of the sill profile 320 of the elevator door 210, i.e. to the right-hand side in the example of Figure 3B, e.g. a second side, of the rectangular shaped groove 325 of the sill profile 320. In the example of Figure 3C the inductive sensor device 100 is arranged inside the cavity 350 arranged to the side 380 of the groove 325 of the sill profile 320. The cavity 350 and the non-conducive cover 360 of the cavity 350 may also be seen from the closer view of Figure 3C Alternatively, the inductive sensor device 100 may be arranged to the bottom 390 of the groove 325 of the sill profile 320 of the elevator door 210 as discussed above. Figure 3D illustrates schematically an example, wherein the inductive sensor device 100 may be arranged to the bottom 390 of the groove 325 of the sill profile 320 of the elevator door 210. The elevator door 210 in Figure 3D may be for example the center opening elevator door of Figure 3A or the side opening elevator door of Figure 3B. In the example of Figure 3D, the inductive sensor device 100 is arranged inside the cavity 350 arranged to the bottom 390 of the groove 325 of the sill profile 320.The cavity 350 and the non-conducive cover 360 of the cavity 350 may be seen from the closer view of Figure 3D.

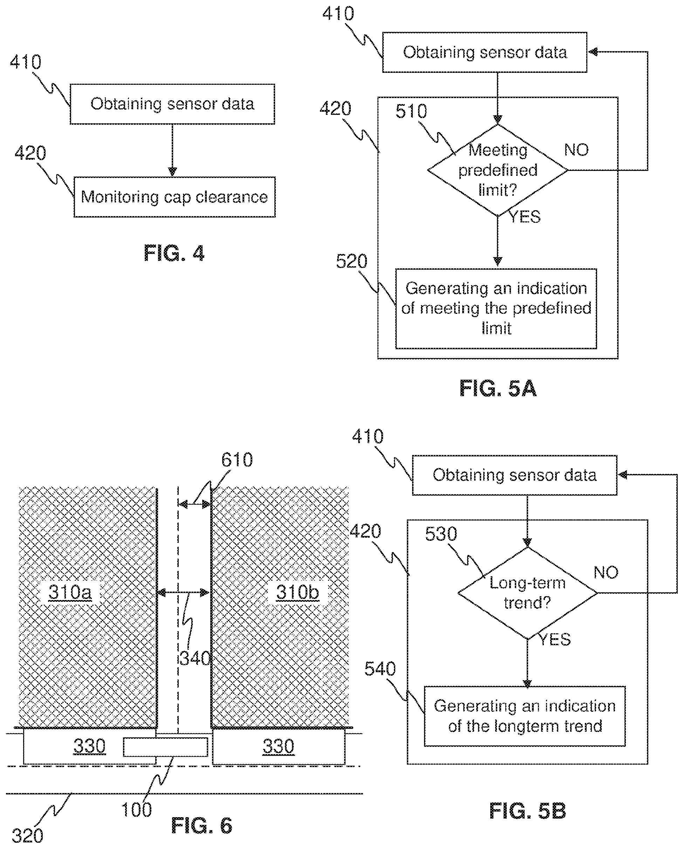

Next the invention is described by referring to Figure 4 schematically illustrating an example of a method for monitoring the elevator door gap clearance as a flow chart.

At a step 410, the inductive sensor device 100 is configured to obtain sensor data representing the gap clearance 340 of the elevator door 210 being in the closed state. As discussed above, for obtaining the sensor data, the inductive coil 140 of the sensor part 110 of the inductive sensor device 100 may be configured to induce eddy currents in the conductive surface of the elevator door 210. The inductive coil 140 of the senor part 110 of the inductive sensor device 100 is used to generate an alternating magnetic field that induces the eddy currents in the conductive surface of the elevator door 210. The inductive coil 140 may then observe a surface area on the conductive surface of the elevator door 210 affected by the magnetic field generated by the inductive coil 140, i.e. a physical area on the conductive surface of the elevator door 210 under the magnetic field generated by the inductive coil 140. The conductive surface of the elevator door 210 may comprise at least one elevator door panel 310a, 310b and/or at least one sliding profile arranged to the at least one elevator door panel 310a, 310b. Because already existing conductive surface of the elevator door 210 may be used, there is no need for arranging a separate conductive counterpart to the elevator door 210 to be able to sense the eddy currents. The obtained sensor data may for example comprise a signal value representing the observed surface area. The signal value may be converted from the observed surface area. The signal value is substantially linear with respect to the surface area affected by the generated magnetic field. In other words, the signal value is changing substantially linearly when the surface area on the conductive surface of the elevator door affected by the magnetic field is changing due to changing gap clearance 340. The signal value may for example be a digital value. The signal value may for example represent (but is not limited to) a power dissipation in the conductive surface of the elevator door 210 or a resonance frequency. The signal value is highest when the elevator door 210 is in the closed state and the signal value decreases when the gap clearance of the elevator door 210 increases, i.e. the gap between the two elevator door panels 310a-310b of the center opening elevator door 210 increases or the gap between the elevator door panel 310a and the upright door frame structure 370 of the side opening elevator door 210 increases. In other words, the smaller the gap clearance 340 is, the larger the signal value is, and when the gap clearance 340 increases, the observed signal value decreases. Similarly, the smaller the gap clearance 340 is, the larger the observed surface area on the conductive surface of the elevator door 210 is, and when the gap clearance 340 increases, the observed surface area on the conductive surface of the elevator door 210 decreases.

At a step 420, the processing part 120 of the inductive sensor device 100 may monitor the gap clearance 340 of the elevator door 210 based on the obtained sensor data. Alternatively or in addition, the inductive sensor device 100 may be configured to provide the obtained sensor data representing the gap clearance 340 of the elevator door 210 to the remote monitoring entity 220 for monitoring the gap clearance 340 of the elevator door 210. The remote monitoring entity 220 may then monitor the gap clearance 340 of the elevator door 210 based on the sensor data at the step 420. This enables the remote monitoring of the gap clearance 340 of the elevator door 210. Moreover, this enables for example a preventive maintenance planning of the elevator door 210 at the remote monitoring entity 220. The obtained sensor data may be provided to the remote monitoring entity 220 by means of the communication part 130 of the inductive sensor device 100 via the elevator control system 270 as discussed above. The obtained sensor data representing the gap clearance 340 of the elevator door 210 may comprise the observed signal value as discussed above. Alternatively or in addition, the obtained sensor data representing the gap clearance 340 of the elevator door 210 may comprise the gap clearance 340 of the elevator door 210 defined for example based on, e.g. derived from, the observed signal value. Alternatively or in addition, the obtained sensor data representing the gap clearance 340 of the elevator door 210 may for example comprise proximity data representing proximity between the inductive sensor device 100 and the conductive surface of the elevator door 210, distance data representing distance between the inductive sensor device 100 and the conductive surface of the elevator door 210, and/or position data representing a position of the conductive surface of the elevator door 210 in relation to the inductive sensor device 100. The proximity data, the distance data, and/or the position data may for example be defined based on, e.g. derived from, the observed signal value. The processing part 120 of the inductive sensor device 100 and/or the remote monitoring entity may be configured to define the proximity data, the distance data, and/or the position data based on the observed signal value. The monitoring of the gap clearance 340 of the elevator door 210 is described from now on mainly based on the sensor data comprising the observed signal value representing the observed surface area on the conductive surface of the elevator door 210 affected by the magnetic field, but the gap clearance 340 of the elevator door 210 may also be monitored based on the sensor data comprising alternatively or in addition the gap clearance 340 of the elevator door 210, the proximity data, the distance data, and/or the position data.

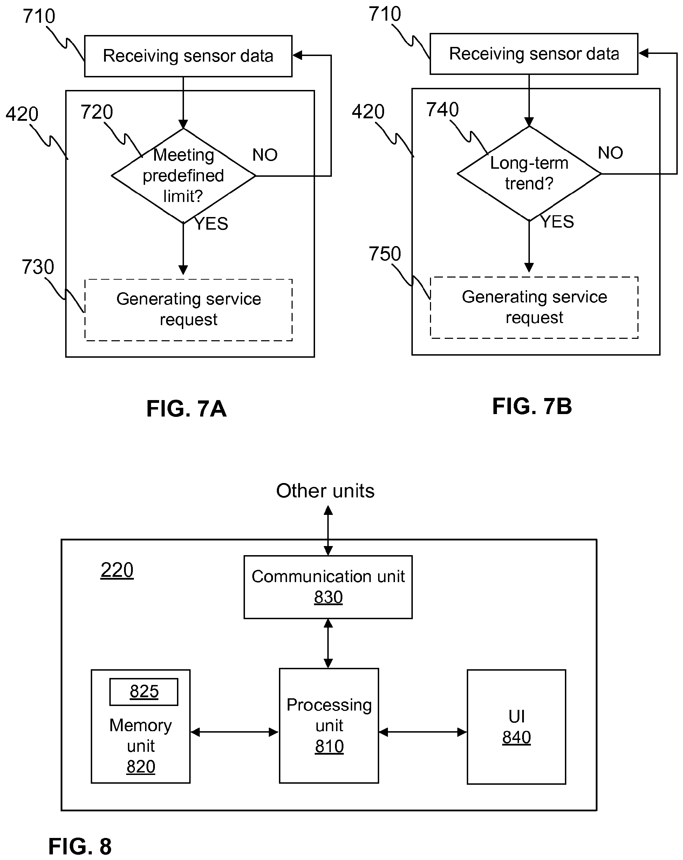

The monitoring of the gap clearance 340 of the elevator door 210 based on the obtained sensor data at the step 420 may for example comprise detecting whether the gap clearance 340 of the elevator door 210 meets the predefined limit 610 and/or detecting a long-term trend in the gap clearance 340. Examples of the monitoring step 420 are discussed later in this application by referring Figures 5A, 5B, 7A, and 7B. To monitor and/or to define the gap clearance 340 of the elevator door 210 based on the sensor data, signal values corresponding to one or more gap clearance values may be defined, i.e. the observed signal value may be calibrated, during an installation phase of the inductive sensor device 100. The signal values corresponding to the one or more gap clearance values may be predefined or taught during the installation phase of the inductive sensor device 100. At least a threshold signal value corresponding to a predefined limit 610 for the gap clearance 340 may be defined. If the observed signal value meets the threshold signal value, i.e. reaches and/or is less than the threshold signal value, it indicates that the gap clearance 340 meets the predefined limit 610, i.e. reaches and/or exceeds the predefined limit 610. The predefined limit 610 may for example be defined by safety regulations. The safety regulations typically define a safety limit for the gap clearance 340, which safety limit shall not be exceeded. In other words, the predefined limit 610 may correspond to the safety limit for the gap clearance 340 defined by the safety regulations. According to a non-limiting example, the safety limit for the gap clearance 340 defined by the safety regulations may be e.g. 6 millimeters, which leads that the predefined limit 610 may also be 6 millimeters. In addition, a closed-door signal value corresponding to the closed state of the elevator door 210, an open-door signal value corresponding to an open state of the elevator door 210, and/or one or more other signal values corresponding to one or more other gap clearance values may be defined. The inductive sensor device 100 may obtain the sensor data continuously. This enables real time sensor data representing the gap clearance 340 of the elevator door 210 may be obtained by the inductive sensor device 100. Although the sensor data may be obtained by the inductive sensor device100 continuously, the monitoring of the gap clearance 340 of the elevator door 210 may preferably be performed for the elevator door 210 being in the closed state, because the gap clearance 340 of the elevator door 210 to be monitored exists when the elevator door 210 is closed. For this, the processing part 120 of the inductive sensor device 100 and/or the remote monitoring entity 220 may need to know or define, when the elevator door 210 is in the closed state. For example, the processing part 120 of the inductive sensor device 100 and/or the remote monitoring entity 220 may receive from the elevator control system 270 door state information indicating the state of the elevator door 210 to be aware of or able to define when the elevator door 210 is in the closed state.

Figure 5A illustrates an example of the method, wherein the monitoring performed by the processing part 120 of the inductive sensor device 100 comprises detecting based on the obtained sensor data that the gap clearance 340 of the elevator door 210 meets the predefined limit 610. At a step 510, the processing part 120 of the inductive sensor device 100 may further be configured to detect that the gap clearance 340 of the elevator door 210 meets the predefined limit 610, i.e. reaches and/or exceeds the predefined limit 610. For example, the processing part 120 of the inductive sensor device 100 may further be configured to detect that the observed signal value meets the threshold signal value, i.e. the observed signal value reaches the threshold signal value and/or is less than the threshold signal value. At a step 520, in response to the detection of meeting the predefined limit 610, i.e. that the gap clearance 340 of the elevator door 210 meets the predefined limit 610 at the step 510, the processing part 120 of the inductive sensor device 100 may further be configured to generate to the remote monitoring entity 220 an indication of meeting the predefined limit 610, i.e. that the gap clearance 340 of the elevator door 210 meets the predefined limit 610. The generated indication may be provided to the remote monitoring entity 220 by means of the communication part 130 of the inductive sensor device 100 via the elevator control system 270.

Figure 6 illustrates schematically an example situation, wherein the gap clearance 340 of the elevator door 210 is detected to meet the predefined limit 610. In other words, in the example situation of Figure 6, the gap clearance 340 of the elevator door 210 is detected to exceed the predefined limit 610. Figure 6 illustrates a closer view of the gap between elevator door panels 310a, 310b of an example center opening elevator door 210. For example, if the predefined limit 610 is defined to be 6 millimeters according to the safety regulations, and the gap clearance 340 of the elevator door 210 defined based on the sensor data provided by the inductive sensor device 100 is for example 10 millimeters. The gap clearance 340 of the elevator door 210 is detected to meet the predefined limit 610. In the example of Figure 6, the inductive sensor device 100 is arranged into the sill profile 320.

Figure 5B illustrates an example of the method, wherein the monitoring performed by the processing part 120 of the inductive sensor device 100 comprises detecting based on the obtained sensor data the long-term trend in the gap clearance 340. At a step 530, the processing part 120 of the inductive sensor device 100 may further be configured to detect based on the obtained sensor data the long-term trend in the gap clearance 340. In other words, the processing part 120 of the inductive sensor device 100 may detect that the gap clearance 430 is gradually increasing during the monitoring in the long-term. For example, the processing part 120 of the inductive sensor device 100 may detect the long-term trend in the observed signal value, i.e. that the observed signal value is gradually decreasing during the monitoring in the long-term. At a step 540, in response to the detection of the long-term trend at the step 530, the processing part 120 of the inductive sensor device 100 may further be configured to generate to the remote monitoring entity 220 an indication of the detection of the long-term trend. The generated indication may be provided to the remote monitoring entity 220 by means of the communication part 130 of the inductive sensor device 100 via the elevator control system 270.

Figure 7A illustrates schematically an example of the method, wherein the monitoring performed by the external monitoring entity 220 comprises detecting based on the obtained sensor data that the gap clearance 340 of the elevator door 210 meets the predefined limit 610. At a step 710, the remote monitoring entity 220 may receive the sensor data from the inductive sensor device 100. At the step 720 the remote monitoring entity 220 may further be configured to detect that the gap clearance 340 of the elevator door 210 meets the predefined limit 610, i.e. reaches and/or exceeds the predefined limit 610. For example, the remote monitoring entity 220 may further be configured to detect that the observed signal value meets the threshold signal value, i.e. the observed signal value reaches the threshold signal value and/or is less than the threshold signal value. At a step 730, in response to the detection of the meeting the predefined limit 610, i.e. that the gap clearance 340 of the elevator door 210 meets the predefined limit 610 at the step 720, the remote monitoring entity 220 may be configured to generate a service request, e.g. to a maintenance personnel. Alternatively or in addition, in response to the receiving from the inductive sensor device 100 the indication of meeting the predefined limit, the remote monitoring entity 220 may be configured to generate a service request, e.g. to a maintenance personnel. For example, the generated service request may be a preventive service request comprising an instruction to check and re-adjust the elevator door panel(s) 310a, 310b in the next planned service visit.

Figure 7B illustrates an example of the method, wherein the monitoring performed by the remote monitoring entity 220 comprises detecting based on the obtained sensor data the long-term trend in the gap clearance 340. At a step 740, the remote monitoring entity 220 may further be configured to detect based on the obtained sensor data the long-term trend in the gap clearance 340. In other words, the remote monitoring entity 220 may detect that the gap clearance 430 is gradually increasing during the monitoring in the long-term. For example, the remote monitoring entity 220 may detect the long-term trend in the observed signal value, i.e. that the observed signal value is gradually decreasing during the monitoring in the long-term. At a step 750, in response to the detection of the long-term trend at the step 740, the remote monitoring entity 220 may be configured to generate a service request, e.g. to a maintenance personnel. Alternatively or in addition, in response to the receiving from the inductive sensor device 100 the indication of the long-term trend, the remote monitoring entity 220 may be configured to generate a service request, e.g. to a maintenance personnel. For example, the generated service request may be a preventive service request comprising an instruction to check and re-adjust the elevator door panel(s) 310a, 310b in the next planned service visit.

Figure 8 illustrates schematically an example of components of the remote monitoring entity 220. The remote monitoring entity 220 may comprise a processing unit 810 comprising one or more processors, a memory unit 820 comprising one or more memories, a communication interface unit 830 comprising one or more communication devices, and possibly a user interface (UI) unit 840. The mentioned elements may be communicatively coupled to each other with e.g. an internal bus. The memory unit 820 may store and maintain portions of a computer program (code) 825, the sensor data, and any other data. The computer program 825 may comprise instructions which, when the computer program 825 is executed by the processing unit 810 of the remote monitoring entity 220 may cause the processing unit 810, and thus the remote monitoring entity 220 to carry out desired tasks, e.g. one or more of the method steps of the remote monitoring entity 220 described above and/or the operations of the remote monitoring entity 220 described above. The processing unit 810 may thus be arranged to access the memory unit 820 and retrieve and store any information therefrom and thereto. For sake of clarity, the processor herein refers to any unit suitable for processing information and control the operation of the remote monitoring entity 220, among other tasks. The operations may also be implemented with a microcontroller solution with embedded software. Similarly, the memory unit 820 is not limited to a certain type of memory only, but any memory type suitable for storing the described pieces of information may be applied in the context of the present invention. The communication interface unit 830 provides one or more communication interfaces for communication with any other unit, e.g. the elevator control system 270, the inductive sensor device 100, one or more databases, or with any other unit. The user interface unit 840 may comprise one or more input/output (I/O) devices, such as buttons, keyboard, touch screen, microphone, loudspeaker, display and so on, for receiving user input and outputting information. The computer program 825 may be a computer program product that may be comprised in a tangible nonvolatile (non-transitory) computer-readable medium bearing the computer program code 825 embodied therein for use with a computer, i.e. the remote monitoring entity 220.

The inductive sensor device 100, the monitoring system 200, and the method described above enable providing preventive monitoring data for the monitoring of the gap clearance of the elevator doors 210. Moreover, the inductive sensor device enables providing continuously sensor data representing the gap clearance of the elevator doors, which in turn enables continuous remote monitoring of the gap clearance of the elevator doors. Thus, the inductive sensor device 100 and the monitoring system 200 enables anticipating and predicting maintenance needs and request planned service visits (for example for adjusting the elevator door panel(s) 310a, 310b), already before stopping the operation of the elevator system and instead off generating call-out. The adjustment of the elevator door panel(s) 310a, 310b of landing doors is one of the typical periodical maintenance operations in the elevator systems. The inductive sensor device 100, the monitoring system 200, and the method described above enable shortening the duration of the periodical maintenance visits, by enabling the continuous remote monitoring of the gap clearance of the elevator door 210, and also predicting call-outs. The inductive sensor device 100 described above is a cost-effective solution for monitoring the gap clearance of the elevator doors.

The specific examples provided in the description given above should not be construed as limiting the applicability and/or the interpretation of the appended claims. Lists and groups of examples provided in the description given above are not exhaustive unless otherwise explicitly stated.

## Claims

1. An inductive sensor device (100) for monitoring gap clearance (340) of an elevator door (210), the inductive sensor device (100) is arranged in association with the elevator door (210), wherein the inductive sensor device (100) is configured to obtain sensor data representing the gap clearance (340) of the elevator door (210) being in a closed state, wherein the gap clearance (340) is a center gap clearance between elevator door panels (310a, 310b) of a center opening elevator door or a side gap clearance between an elevator door panel (310a) and an upright door frame structure (370) of a side opening elevator door, and wherein the inductive sensor device (100) is further configured to:
monitor the gap clearance (340) of the elevator door (210) based on the obtained sensor data, and/or
provide the obtained sensor data to a remote monitoring entity (220) for monitoring the gap clearance (340) of the elevator door (210).

2. The inductive sensor device (100) according to claim 1, further configured to:
detect a long-term trend in the gap clearance (340) of the elevator door (210) based on the obtained sensor data, and
generate to the remote monitoring entity (220) an indication of detection of the long-term trend in response to the detection of the long-term trend.

3. The inductive sensor device (100) according to any of the preceding claims, wherein the inductive sensor device (100) is arranged into a sill profile (320) of the elevator door (210).

4. The inductive sensor device (100) according to claim 3, wherein the inductive sensor device (100) is arranged to a side (380) of a groove (325) of the sill profile (320) of the elevator door (210) or to a bottom (390) of a groove (325) of the sill profile (320) of the elevator door (210).

5. The inductive sensor device (100) according to any of the preceding claims comprising an inductive coil (140) configured to generate an alternating magnetic field that induces eddy currents in a conductive surface of the elevator door (210) to obtain the sensor data.

6. The inductive sensor device (100) according to claim 5, wherein the conductive surface of the elevator door (210) comprises at least one elevator door panel (310a, 310b) or at least one sliding profile (330) arranged to the at least one elevator door panel (310a, 310b).

7. A method for monitoring gap clearance (340) of an elevator door (210), wherein the method comprises:
obtaining (410), by an inductive sensor device (100) arranged in association with the elevator door (210), sensor data representing the gap clearance (340) of the elevator door (210) being in a closed state, wherein the gap clearance (340) is a center gap clearance between elevator door panels (310a, 310b) of a center opening elevator door or a side gap clearance between an elevator door panel (310a) and an upright door frame structure (370) of a side opening elevator door; and
monitoring (420), by the inductive sensor device (100) and/or a remote monitoring entity (220), the gap clearance (340) of the elevator door (210) based on the obtained sensor data.

8. The method according to claim 7, further comprising:
detecting (510), by the inductive sensor device (100), that the gap clearance (340) of the elevator door (210) meets a predefined limit (610) based on the obtained sensor data; and
generating (520), by the inductive sensor device (100), to the remote monitoring entity (220) an indication of meeting the predefined limit (610) in response to the detection of meeting the predefined limit (610).

9. The method according to claim 7 or 8, further comprising:
detecting (530), by the inductive sensor device (100), a long-term trend in the gap clearance (340) of the elevator door (210) based on the obtained sensor data; and
generating (540), by the inductive sensor device (100), to the remote monitoring entity (220) an indication of detection of the long-term trend in response to the detection of the long-term trend.

10. The method according to any of claims 7 to 9, further comprising detecting (510), by the remote monitoring entity (220), that the gap clearance (340) of the elevator door (210) meets a predefined limit (610) based on the obtained sensor data; and/or
detecting (510), by the remote monitoring entity (220), a long-term trend in the gap clearance (340) of the elevator door (210) based on the obtained sensor data.

11. The method according to according to any of claims 7 to 10, wherein the inductive sensor device (100) is arranged into a sill profile (320) of the elevator door (210).

12. The method according to claim 11, wherein the inductive sensor device (100) is arranged to a side (380) of a groove (325) of the sill profile (320) of the elevator door (210) or to a bottom (390) of a groove (325) of the sill profile (320) of the elevator door (210).

13. The method according to any of claims 7 to 12, wherein the sensor data is obtained by generating, by an inductive coil (140) of the inductive sensor device (100), an alternating magnetic field that induces eddy currents in a conductive surface of the elevator door (210).

14. A monitoring system (200) for monitoring a gap clearance of one or more elevator doors (210), the monitoring system (200) comprising:
a remote monitoring entity (220), and
one or more inductive sensor devices (100) according to any of claims 1 to 6.

15. The monitoring system (200) according to claim 14, wherein the remote monitoring entity is configured to:
detect based on obtained sensor data that the gap clearance (340) of the elevator door (210) meets a predefined limit (610), and/or
detect long-term trend in the gap clearance (340) of the elevator door (210) based on the obtained sensor data.

## Patentansprüche

1. Induktive Sensorvorrichtung (100) zum Überwachen des Spaltfreiraumes (340) einer Aufzugstür (210), wobei die induktive Sensorvorrichtung (100) in Verbindung mit der Aufzugstür (210) angeordnet ist, wobei die induktive Sensorvorrichtung (100) konfiguriert ist, um Sensordaten zu erhalten, die den Spaltfreiraum (340) der Aufzugstür (210) in einem geschlossenen Zustand darstellen, wobei der Spaltfreiraum (340) ein mittiger Freiraum zwischen Aufzugstürplatten (310a, 310b) einer mittig öffnenden Aufzugstür oder ein seitlicher Freiraum zwischen einer Aufzugstürplatte (310a) und einer aufrechten Türrahmenstruktur (370) einer seitlich öffnenden Aufzugstür ist, und wobei die induktive Sensorvorrichtung (100) ferner konfiguriert ist zum:
Überwachen des Spaltfreiraums (340) der Aufzugstür (210) basierend auf den erhaltenen Sensordaten, und/oder
Bereitstellen der erhaltenen Sensordaten an eine Fernüberwachungseinheit (220) zum Überwachen des Spaltfreiraums (340) der Aufzugstür (210).

2. Induktive Sensorvorrichtung (100) nach Anspruch 1, die ferner konfiguriert ist zum:
Erkennen eines langfristigen Trends im Spaltfreiraum (340) der Aufzugstür (210) basierend auf den erhaltenen Sensordaten, und
Erzeugen einer Angabe über das Erkennen des Langzeittrends an die Fernüberwachungseinheit (220) als Reaktion auf das Erkennen des Langzeittrends.

3. Induktive Sensorvorrichtung (100) nach einem der vorstehenden Ansprüche, wobei die induktive Sensorvorrichtung (100) in einem Schwellerprofil (320) der Aufzugstür (210) angeordnet ist.

4. Induktive Sensorvorrichtung (100) nach Anspruch 3, wobei die induktive Sensorvorrichtung (100) an einer Seite (380) einer Nut (325) des Schwellerprofils (320) der Aufzugstür (210) oder an einem Boden (390) einer Nut (325) des Schwellerprofils (320) der Aufzugstür (210) angeordnet ist.

5. Induktive Sensorvorrichtung (100) nach einem der vorstehenden Ansprüche, umfassend eine Induktionsspule (140), die konfiguriert ist, ein magnetisches Wechselfeld zu erzeugen, das Wirbelströme in einer leitfähigen Oberfläche der Aufzugstür (210) induziert, um die Sensordaten zu erhalten.

6. Induktive Sensorvorrichtung (100) nach Anspruch 5, wobei die leitfähige Oberfläche der Aufzugstür (210) mindestens eine Aufzugstürplatte (310a, 310b) oder mindestens ein Gleitprofil (330) umfasst, das an der mindestens einen Aufzugstürplatte (310a, 310b) angeordnet ist.

7. Verfahren zum Überwachen des Spaltfreiraumes (340) einer Aufzugstür (210), wobei das Verfahren Folgendes umfasst:
Erhalten (410) von Sensordaten, die den Spaltfreiraum (340) der Aufzugstür (210) in einem geschlossenen Zustand darstellen, durch eine induktive Sensorvorrichtung (100), die in Verbindung mit der Aufzugstür (210) angeordnet ist, wobei der Spaltfreiraum (340) ein mittlerer Spaltfreiraum zwischen Aufzugstürplatten (310a, 310b) einer sich mittig öffnenden Aufzugstür oder ein seitlicher Spaltfreiraum zwischen einer Aufzugstürplatte (310a) und einer aufrechten Türrahmenstruktur (370) einer sich seitlich öffnenden Aufzugstür ist; und
Überwachen (420) des Spaltfreiraums (340) der Aufzugstür (210) basierend auf den erhaltenen Sensordaten durch die induktive Sensorvorrichtung (100) und/oder eine Fernüberwachungseinheit (220).

8. Verfahren nach Anspruch 7, ferner umfassend:
Erkennen (510), durch die induktive Sensorvorrichtung (100), dass der Spaltfreiraum (340) der Aufzugstür (210) einen vordefinierten Grenzwert (610) basierend auf den erhaltenen Sensordaten einhält; und
Erzeugen (520) einer Angabe über das Erreichen des vordefinierten Grenzwerts (610) durch die induktive Sensorvorrichtung (100) an die Fernüberwachungseinheit (220) als Reaktion auf die Erfassung des Erreichens des vordefinierten Grenzwerts (610).

9. Verfahren nach Anspruch 7 oder 8, ferner umfassend:
Erfassen (530) eines langfristigen Trends im Spaltfreiraum (340) der Aufzugstür (210) durch die induktive Sensorvorrichtung (100), basierend auf den erhaltenen Sensordaten; und
Erzeugen (540) einer Angabe über die Erkennung des Langzeittrends durch die induktive Sensorvorrichtung (100) an die Fernüberwachungseinheit (220) als Reaktion auf die Erkennung des Langzeittrends.

10. Verfahren nach einem der Ansprüche 7 bis 9, ferner umfassend das Erkennen (510) durch die Fernüberwachungseinheit (220), dass der Spaltfreiraum (340) der Aufzugstür (210) einen vordefinierten Grenzwert (610) basierend auf den erhaltenen Sensordaten einhält; und/oder
Erkennen (510) eines langfristigen Trends im Spaltfreiraum (340) der Aufzugstür (210), basierend auf den erhaltenen Sensordaten, durch die Fernüberwachungseinheit (220).

11. Verfahren nach einem der Ansprüche 7 bis 10, wobei die induktive Sensorvorrichtung (100) in einem Schwellerprofil (320) der Aufzugstür (210) angeordnet ist.

12. Verfahren nach Anspruch 11, wobei die induktive Sensorvorrichtung (100) an einer Seite (380) einer Nut (325) des Schwellerprofils (320) der Aufzugstür (210) oder an einem Boden (390) einer Nut (325) des Schwellerprofils (320) der Aufzugstür (210) angeordnet ist.

13. Verfahren nach einem der Ansprüche 7 bis 12, wobei die Sensordaten dadurch erhalten werden, dass durch eine Induktionsspule (140) der induktiven Sensorvorrichtung (100) ein magnetisches Wechselfeld erzeugt wird, das Wirbelströme in einer leitfähigen Oberfläche der Aufzugstür (210) induziert.

14. Überwachungssystem (200) zum Überwachen eines Spaltfreiraums von einer oder mehreren Aufzugstüren (210), das Überwachungssystem (200) umfassend:
eine Fernüberwachungseinheit (220), und
eine oder mehrere induktive Sensorvorrichtungen (100) nach einem der Ansprüche 1 bis 6.

15. Überwachungssystem (200) nach Anspruch 14, wobei die Fernüberwachungseinheit konfiguriert ist zum:
Erkennen basierend auf erhaltenen Sensordaten, dass der Spaltfreiraum (340) der Aufzugstür (210) einen vordefinierten Grenzwert (610) einhält, und/oder
Erkennen eines langfristigen Trends im Spaltfreiraum (340) der Aufzugstür (210) basierend auf den erhaltenen Sensordaten.

## Revendications

1. Dispositif de capteur inductif (100) pour surveiller le jeu d'espace (340) d'une porte d'ascenseur (210), le dispositif de capteur inductif (100) étant agencé en association avec la porte d'ascenseur (210), dans lequel le dispositif de capteur inductif (100) est configuré pour obtenir des données de capteur représentant le jeu d'espace (340) de la porte d'ascenseur (210) étant dans un état fermé, dans lequel le jeu d'espace (340) est un jeu central entre des panneaux de porte d'ascenseur (310a, 310b) d'une porte d'ascenseur à ouverture centrale ou un jeu latéral entre un panneau de porte d'ascenseur (310a) et une structure de cadre de porte verticale (370) d'une porte d'ascenseur à ouverture latérale, et dans lequel le dispositif de capteur inductif (100) est en outre configuré pour :
surveiller le jeu d'espace (340) de la porte d'ascenseur (210) sur la base des données de capteur obtenues, et/ou
fournir les données de capteur obtenues à une entité de surveillance à distance (220) pour surveiller le jeu d'espace (340) de la porte d'ascenseur (210).

2. Dispositif de capteur inductif (100) selon la revendication 1, configuré en outre pour :
détecter une tendance à long terme dans le jeu d'espace (340) de la porte d'ascenseur (210) sur la base des données de capteur obtenues, et
générer à l'entité de surveillance à distance (220) une indication de détection de la tendance à long terme en réponse à la détection de la tendance à long terme.

3. Dispositif de capteur inductif (100) selon l'une quelconque des revendications précédentes, dans lequel le dispositif de capteur inductif (100) est agencé dans un profil de seuil (320) de la porte d'ascenseur (210).

4. Dispositif de capteur inductif (100) selon la revendication 3, dans lequel le dispositif de capteur inductif (100) est agencé sur un côté (380) d'une rainure (325) du profil de seuil (320) de la porte d'ascenseur (210) ou sur un fond (390) d'une rainure (325) du profil de seuil (320) de la porte d'ascenseur (210).

5. Dispositif de capteur inductif (100) selon l'une quelconque des revendications précédentes comprenant une bobine inductive (140) configurée pour générer un champ magnétique alternatif qui induit des courants de Foucault dans une surface conductrice de la porte d'ascenseur (210) pour obtenir les données de capteur.

6. Dispositif de capteur inductif (100) selon la revendication 5, dans lequel la surface conductrice de la porte d'ascenseur (210) comprend au moins un panneau de porte d'ascenseur (310a, 310b) ou au moins un profil coulissant (330) agencé sur l'au moins un panneau de porte d'ascenseur (310a, 310b).

7. Procédé de surveillance du jeu d'espace (340) d'une porte d'ascenseur (210),
dans lequel le procédé comprend :
l'obtention (410), par un dispositif de capteur inductif (100) agencé en association avec la porte d'ascenseur (210), de données de capteur représentant le jeu d'espace (340) de la porte d'ascenseur (210) étant dans un état fermé, dans lequel le jeu d'espace (340) est un jeu central entre des panneaux de porte d'ascenseur (310a, 310b) d'une porte d'ascenseur à ouverture centrale ou un jeu latéral entre un panneau de porte d'ascenseur (310a) et une structure de cadre de porte verticale (370) d'une porte d'ascenseur à ouverture latérale ; et
la surveillance (420), par le dispositif de capteur inductif (100) et/ou une entité de surveillance à distance (220), du jeu d'espace (340) de la porte d'ascenseur (210) sur la base des données de capteur obtenues.

8. Procédé selon la revendication 7, comprenant en outre :
la détection (510), par le capteur inductif (100), que le jeu d'espace (340) de la porte d'ascenseur (210) respecte une limite prédéfinie (610) sur la base des données de capteur obtenues ; et
la génération (520), par le dispositif de capteur inductif (100), à l'entité de surveillance à distance (220) d'une indication de respect de la limite prédéfinie (610) en réponse à la détection du respect de la limite prédéfinie (610).

9. Procédé selon la revendication 7 ou 8, comprenant en outre :
la détection (530), par le dispositif de capteur inductif (100), d'une tendance à long terme dans le jeu d'espace (340) de la porte d'ascenseur (210) sur la base des données de capteur obtenues ; et
la génération (540), par le dispositif de capteur inductif (100), à l'entité de surveillance à distance (220) d'une indication de détection de la tendance à long terme en réponse à la détection de la tendance à long terme.

10. Procédé selon l'une quelconque des revendications 7 à 9, comprenant en outre la détection (510), par l'entité de surveillance à distance (220), que le jeu d'espace (340) de la porte d'ascenseur (210) respecte une limite prédéfinie (610) sur la base des données de capteur obtenues ; et/ou
la détection (510), par l'entité de surveillance à distance (220), d'une tendance à long terme dans le jeu d'espace (340) de la porte d'ascenseur (210) sur la base des données de capteur obtenues.

11. Procédé selon l'une quelconque des revendications 7 à 10, dans lequel le dispositif de capteur inductif (100) est agencé dans un profil de seuil (320) de la porte d'ascenseur (210).

12. Procédé selon la revendication 11, dans lequel le dispositif de capteur inductif (100) est agencé sur un côté (380) d'une rainure (325) du profil de seuil (320) de la porte d'ascenseur (210) ou sur un fond (390) d'une rainure (325) du profil de seuil (320) de la porte d'ascenseur (210).

13. Procédé selon l'une quelconque des revendications 7 à 12, dans lequel les données de capteur sont obtenues en générant, par une bobine inductive (140) du dispositif de capteur inductif (100), un champ magnétique alternatif qui induit des courants de Foucault dans une surface conductrice de la porte d'ascenseur (210).

14. Système de surveillance (200) pour surveiller un jeu d'une ou de plusieurs portes d'ascenseur (210), le système de surveillance (200) comprenant :
une entité de surveillance à distance (220), et
un ou plusieurs dispositifs de capteurs inductifs (100) selon l'une quelconque des revendications 1 à 6.

15. Système de surveillance (200) selon la revendication 14, dans lequel l'entité de surveillance à distance est configurée pour :
détecter, sur la base de données de capteurs obtenues, que le jeu d'espace (340) de la porte d'ascenseur (210) respecte une limite prédéfinie (610), et/ou
détecter la tendance à long terme du jeu d'espace (340) de la porte d'ascenseur (210) sur la base des données de capteur obtenues.
